# EUROPÄISCHE PATENTANMELDUNG

(11) **EP 2 273 212 A2**
(43) Veröffentlichungstag der Anmeldung: **12.01.2011**
(21) Anmeldenummer: 10006586.1
(22) Anmeldetag: 24.06.2010
(51) Int. Cl.: F24J 2/52

(54) **Befestigungselement für Dachaufbauten, insbesondere Solaranlagen, Dachaufbau mit einem derartigen Befestigungselement und Verfahren zur Befestigung eines Teils einer Solaranlage**

(30) Priorität: 26.06.2009 DE 102009030836
(71) Anmelder: Rensburg, Markus, 58093 Hagen (DE)
(72) Erfinder: Rensburg, Markus, 58093 Hagen (DE)
(74) Vertreter: Sawodny, Michael-Wolfgang

(57) **Zusammenfassung**

Die Erfindung betrifft Befestigungselement für Dachaufbauten, umfassend
einen Befestigungskörper,
wenigstens ein mit dem Befestigungskörper verbundenes hakenförmiges Element,
**dadurch gekennzeichnet, dass**
das hakenförmige Element wenigstens teilweise ein Drahtbiegeelement aus gebogenem Draht umfasst, wobei durch den in die Form eines Hakens gebogenen Drahtes insbesondere ein Langloch ausgebildet wird und
der Befestigungskörper eine Vorderseite und eine Rückseite aufweist und der Draht des Drahtbiegeelementes wenigstens teilweise hinter die Rückseite des Befestigungskörpers geführt Wird, derart, dass
das Drahtbiegeelement den Befestigungskörper an der Rückseite hintergreift.

## Beschreibung

### Gebiet der Erfindung

Die Erfindung betrifft ein Befestlgungselement für Dachaufbauten, insbesondere für Solaranlagen, die Verwendung eines derartigen Befestigungselements, einen Dachaufbau mit einem derartigen Befestigungselement sowie ein Verfahren zum Verbinden eines Teils einer Solaranlage mit einem Teil des Daches.

### Stand der Technik

Die heute immer weiter verbreiteten Solaranlagen auf Hausdächern erfordern eine sichere Verbindung von Teilen der Solaranlagen, insbesondere der Paneelen mit den Dächern. Eine derartige Verbindung ist insbesondere für die Solarpaneele, die zum einen eine Solarpaneele einer thermischen Solaranlage sein kann, wie auch eine Solarpaneele für die photovoltaische Stromerzeugung, erforderlich. Die Solarpaneelen entweder für solarthermische Anlagen oder photovoltaische Anlagen werden Insbesondere auf bestehenden Dächern von Häusern montiert, wobei gemäß dem Stand der Technik die einzelnen Paneelen beispielsweise mit Dachhaken auf dem Dach befestigt werden. Hierzu wird beispielsweise bei einem mit Ziegel eingedeckten Dach zunächst ein oder mehrere Ziegel verschoben und sodann der Dachhaken mit der Holzkonstruktion des Daches, beispielsweise der Dachlattung, verbunden, insbesondere verschraubt. Die Ziegel werden dann über die Verschraubung geschoben und die Solarpaneele in den Dachhaken eingehängt. Derartige Solarbefestiger für Photovoltaik- und/oder Brauchwasseranlagen werden beispielsweise von der Firma Eurotec GmbH, Unter dem Hofe 5, 58099 Hagen, angeboten unter www.E-U-R-O-Tec.de.

Einen Dachhaken mit einer integrierten Rohrschelle zeigt die DE 201 09 941 U1. Der Dachhaken gemäß der DE 20 109 941 U1 umfasst einen Schaft dessen erstes Ende mit einer parallel zum Schaft verlaufenden Rohrschelle und dessen zweites Ende mit einem Befestigungskörper in Form einer Schweißnaht entlang des Schaftes verbunden ist.

Die DE 87 02 235.4 zeigt einen Dachhaken bestehend aus einem halbkreisförmigen Bügel, einem Befestigungsblech und einem Verbindungsbolzen. Der halbkreisförmige Bügel ist an dem Befestigungsblech mittels des Verbindungsbolzens befestigt.

Der Nachteil der Dachhaken gemäß dem Stand der Technik ist darin zu sehen, dass die hakenförmigen Elemente der Dachhaken mit einem Befestigungskörper beispielsweise über eine Schweißnaht, wie zum Beispiel in der DE 20 109 941 U1 nicht lösbar verbunden wurde. Gemäß dem Stand der Technik umfasste das hakenförmige Element des Weiteren wie in der DE 20 109 941 U1 oder DE 87 02 235.4 gezeigt, einen massiven Haken mit zum Beispiel einer Bohrung, insbesondere einem Langloch, zur Aufnahme eines Verbindungsmittels, mit dem zum Beispiel ein Teil einer Solaranlage, beispielsweise die Solarpaneele, oder ein Rohr direkt oder indirekt über eine Halteeinrichtung verbunden werden konnte. Nachteilig an diesem Dachhaken gemäß dem Stand der Technik war, dass die Dachhaken selbst ein hohes Eigengewicht hatten und der Dachhaken bei Befestigung z. B. von Solarpaneelen entlang der Schweißnaht bzw. der Niete belastet wurde, was sehr oft zum Bruch der Verbindung von Haken und Befestigung, insbesondere bei hohen Schnee- und/oder Windlasten führte.

Aus der FR 25 37 258 ist ein Dachhaken aus Draht in Form eines Drahtbiegeelementes bekannt geworden, der aber keinen Befestigungskörper für eine Befestigung an einem Dachsparren umfasst, sondern als vollständiges Drahtbiegeteil ausgebildet ist, das in beispielsweise eine andere Solarpanelle eingehängt wird. Eine Befestigung an der Holzkonstruktion beispielsweise mit Hilfe eines Befestigungskörpers, insbesondere einer Befestigungsplatte ist nicht vorgesehen. Damit konnte mittels des Dachhakens gemäß der FR 25 37 258 A1 zwar eine Indachheizung eingehängt und gegen ein Abrutschen gesichert werden. Dies aber bedeutet, dass der die Aufnahme von Drucklasten, Wind- und Soglasten war aber nicht möglich.

Ein weiterer Nachteil der Systeme gemäß dem Stand der Technik war die aufwendige Herstellung der Dachhaken.

### Beschreibung der Erfindung

Aufgabe der Erfindung ist es somit, ein Befestigungselement für Dachaufbauten, insbesondere Teile einer Solaranlage, bevorzugt einer Solarpaneele, anzugeben, mit dem die oben genannten Nachteile vermieden werden können.

Erfindungsgemäß wird diese Aufgabe dadurch gelöst, dass das Befestigungselement für Dachaufbauten, insbesondere deren Unterkonstruktion beispielsweise aus Aluminiumprofilen, einen Befestigungskörper und wenigstens einen mit dem Befestigungskörper verbundenes hakenförmiges Element umfasst.

Das hakenförmige Element ist im Gegensatz zum Stand der Technik nicht als massiver Haken ausgebildet, sondern wird durch ein Drahtbiegeelement zur Verfügung gestellt. Dies bedeutet, dass der Haken lediglich aus einem Drahtelement hergestellt wird, wobei der Haken durch Biegen des Drahtes geformt wird. Ein Haken aus einem Drahtbiegeelement ist wesentlich einfacher und schneller zu fertigen als ein massiver Dachhaken, bei dem in den massiven Dachhaken nach dessen Herstellung noch eine Bohrung eingebracht werden muss. Bevorzugt wird der Draht des Weiteren so gebogen, dass ein Langloch ausgebildet wird, in das ein Befestigungsmittel für die Befestigung der Solarpanelle eingreifen kann. Des Weiteren musste das hakenförmige Element mit dem Befestigungskörper wie in der DE 20 109 941 U1 beschrieben, entlang des Schaftes des Hakens verschweißt werden. Ein weiterer Vorteil neben der einfachen Fertigbarkeit der Erfindung ist darin zu sehen, dass der aus Draht gebogene Haken wesentlich sicherer mit dem Befestigungskörper verbunden werden kann, nämlich dadurch, dass das Drahtbiegeteil nicht entlang einer Linie mit dem Befestigungskörper verbunden, insbesondere verschweißt wird, sondern hinter die Rückseite des Befestigungskörpers geführt wird, wobei die Rückseite des Befestigungskörpers beispielsweise auf einem Dachsparren aufliegt. An der Rückseite des Befestigungskörpers kann dann das Drahtbiegeteil punktuell mit dem Befestigungskörper beispielsweise verschweißt sein. Wird die an dem Dachhaken befestigte Solarpaneele beispielsweise mit einer Schneelast belastet, so wird diese nicht in die Schweißnaht eingeleitet, sondern in den Befestigungskörper, der wiederum an der Dachlatte befestigt ist. Das Drahtbiegeteil dient also der Krafteinleitung der am Drahtbiegeteil befestigten Solarpaneele bzw. der Unterkonstruktion der Solarpaneele in das Tragwerk des Daches, beispielsweise den Dachsparren. Durch das erfindungsgemäße Befestigungselement, bestehend aus dem hakenförmigen Element und einem Befestigungskörper, der auf seiner Rückseite mit dem hakenförmigen Element verbunden ist, wird ein System zur Verfügung gestellt, einem Teil des Daches, insbesondere einem Tragwerk ein statisches System zur Verfügung stellt, welches nicht nur Schublasten wie im Falle der FR 25 37 258 A1 aufnimmt, sondern auch Druck". Wind- und Soglasten.

Auch Schwingungen des Hakens können im Gegensatz zur FR 25 37 258 A1 abgetragen werden. Die Last die mittels des erfindungsgemäßen Hakens abgetragen werden kann, liegt bevorzugt im Bereich 40kg bis 250kg, insbesondere zwischen 50kg und 170kg. Bevorzugt ist wegen einfacher Fertigbarkeit der als plattenförmiges Element ausgebildete Befestigungskörper ein Stanzteil.

Besonders bevorzugt ist es, wenn die Befestigungskörper auf der Druckseite Aufnahmen für die Drähte des Drahtbiegeteils aufweisen.

In diese Aufnahmen des Befestigungskörpers können dann die Drähte auf der Rückseite des Befestigungskörpers eingelegt werden. Die Kraftübertragung wird durch die Anpassung der Rückseite des Befestigungskörpers an die Form des Drahtbiegeteils optimiert, insbesondere liegt das Drahtbiegeteil sowie der Befestigungskörper im Wesentlichen in derselben Ebene auf dem Dachsparren auf.

Besonders bevorzugt ist es, um das Drahtbiegeteil in seiner Position zu fixieren, das Drahtbiegeteil mit dem Befestigungskörper nicht lösbar, beispielsweise mit Hilfe einer Schweißverbindung, insbesondere einer Punktschweißverbindung, zu verbinden. Im Gegensatz zum Stand der Technik, bei der der Haken an einer Kante des Befestigungskörpers mit Hilfe einer Schweißnaht befestigt wurde, findet die Verbindung bei dem erfindungsgemäßen Befestigungselement durch Punktschweißen auf der Rückseite des Befestigungskörpers statt. Dadurch, dass die Rückseite des Befestigungskörpers, der beispielsweise auf einem Dachsparren verschraubt wird mit dem Drahtbiegeteil verbunden wird, wird die Last in den Dachsparren eingeleitet und nicht in die Schweißnaht wie im Stand der Technik, so dass ein Bruch derselben verhindert werden kann. Die beiden im wesentlichen parallel zueinander verlaufenden Drahtabschnitte des Drahtbiegeteiles bieten Führungen für Befestigungsmittel beispielsweise Schrauben, mit denen die Solarpaneele bzw. die Konstruktionen zur Aufnahme der Solarpaneele an dem erfindungsgemäßen Befestigungselement befestigt werden können. Bei dieser Lösung wird somit die Schweißnaht, insbesondere der Schweißpunkt, der das in Form eines Hakens gebogene Drahtbiegeteil mit dem Befestigungskörper verbindet unter den Befestigungskörper, der als plattenförmiges Element, insbesondere als Ankerplatte ausgebildet ist, verlegt. Hierdurch liegt die Schweißnaht, insbesondere der Schweißpunkt nicht in der Belastungszone des Befestigungselementes bestehend aus hakenförmigem Element und Befestigungskörper und ein Bruch des Befestigungselementes wird verhindert.

Insbesondere findet das erfindungsgemäße Befestigungselement Verwendung zur Befestigung von Teilen von Solaranlagen. Solaranlagen können sowohl photovoltaische Solaranlagen wie auch Brauchwasseranlagen sein. Die mit dem erfindungsgemäßen Befestigungselement zu befestigenden Teile sind im Wesentlichen Solarpaneele. Die Befestigung der Solarpaneele erfolgt in der Regel nicht direkt mit dem Befestigungselement, sondern am Befestigungselement werden Rahmen beziehungsweise Profile insbesondere aus Aluminium angeordnet, die wiederum dazu dienen, die Solarpaneele aufzunehmen.

Neben dem Befestigungselement stellt die Erfindung auch einen Dachaufbau, insbesondere eine Solaranlage, die auf einem oder in einem Dach angeordnet werden kann, zur Verfügung. Die Solaranlage umfasst eine Solarpaneele sowie ein Befestigungselement, an dem die Solarpaneele direkt oder indirekt über eine Rahmenkonstruktion befestigt wird. Erfindungsgemäß ist das Befestigungselement ein solches, das ein Drahtbiegeelement als hakenförmiges Element aufweist. Der Befestigungskörper des Befestigungselementes wiederum ist mit dem Dach verbunden und die Solarpaneele entweder direkt oder indirekt über eine Rahmenkonstruktion mit dem hakenförmigen Drahtbiegeelement.

Besonders bevorzugt ist es, wenn der Befestigungskörper mit dem Dachsparren des Daches lösbar, beispielsweise mit Hilfe von Schrauben, verbunden ist. Auch eine lösbare Verbindung der Rahmenkonstruktion beziehungsweise der Paneele selbst mit dem hakenförmigen Drahtbiegeelement ist vorteilhaft. Bevorzugt wird das hakenförmige Drahtbiegeelement zumindest teilweise auf die Rückseite des bevorzugt plattenförmigen Befestigungskörpers geführt. Wird der Befestigungskörper mit dem Dachsparren oder einem anderen Dachträger verbunden, so wird der Draht zwischen der Rückseite des Befestigungskörpers und einem Tragwerk, beispielsweise einem Dachsparren angeordnet bzw. geklemmt.

Darüber hinaus wird ein Verfahren zur Befestigung eines Teiles einer Solaranlage, insbesondere einer Solarpaneele auf einem Dach angegeben. Bei diesem Verfahren wird zunächst der Befestigungskörper des Befestigungselementes beispielsweise auf einem Dachsparren mit Holzschrauben festgeschraubt. Sodann wird der Befestigungskörper beispielsweise mit einem Ziegel überdeckt. Über den Ziegel ragt dann das hakenförmige Drahtbiegeelement hinaus. Das hakenförmige Drahtbiegeelement wird dann direkt oder indirekt mit der Solarpaneele verbunden, beispielsweise mit Hilfe einer Rahmenkonstruktion. Hier kann eine Hammerkopfschraube zur Befestigung der Rahmenkonstruktion am Drahtbiegeteil verwandt werden.

Die Erfindung soll nachfolgend anhand der Figuren beispielhaft beschrieben werden.

Es zeigen:
- Fig. 1: eine dreidimensionale Ansicht eines hakenförmigen Elementes gemäß dem Stand der Technik;
- Fig. 2a - 2c: eine Ausgestaltung eines erfindungsgemäßen Befestigungselementes mit einem Drahtbiegehaken.

Für die Montage auf Ziegel-Schrägdächern von Dachaufbauten, insbesondere Solaranlagen, beispielsweise Photovoltaikanlagen oder Brauchwasseranlagen, werden Anlagenteile, insbesondere Solarpaneele, mit sogenannten Dachhaken oder Sparrenankern montiert. Dabei dient ein Befestigungskörper, beispielsweise eine Ankerplatte, zur Befestigung des Dachhakens mittels Verbindungsmitteln wie beispielsweise Holzschrauben am Dach, insbesondere am tragenden Teil des Daches, beispielsweise den Dachsparren. Mit dem Befestigungskörper oder der Ankerplatte verbunden ist ein Bügel, der auch als hakenförmiges Element bezeichnet wird, der zwischen den Dachplatten die Haltekraft nach außen überträgt. An dem Bügel beziehungsweise dem hakenförmigen Element werden dann wiederum die Solarpaneele direkt beziehungsweise Trägerprofile für die Solarpaneele befestigt. Die Dimensionierung des hakenförmigen Elementes erfolgt unter Berücksichtigung der örtlichen Schnee- und Windlasten, wobei zu berücksichtigen ist, dass ein Haken die Last nur dann aufnehmen und in die Unterkonstruktion einleiten kann, wenn er sich elastisch verformen kann und dabei den Ziegel nicht berührt. Deswegen muss bei sehr großen örtlichen Schnee- oder auch Windlasten beziehungsweise Flächenlasten ein extra verstärkter Hakentyp eingesetzt werden.

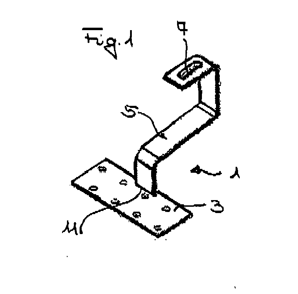

Figur 1 zeigt ein Befestigungselement gemäß dem Stand der Technik, wie es beispielsweise von der Firma Eurotec GmbH, Unter dem Hofe 5, 58099 Hagen, am Anmeldetag vertrieben wird.

Das Befestigungselement 1 gemäß dem Stand der Technik umfasst einen Befestigungskörper 3 sowie ein mit dem Befestigungskörper verbundenes hakenförmiges Element 5. Das hakenförmige Element 5 ist als Bügel ausgebildet und aus einem Vollmaterial. Im hakenförmigen Element ist ein Langloch 7 eingelassen, in das ein Verbindungsmittel eingedreht werden kann, mit dem eine Solarpaneele direkt beziehungsweise ein Rahmenteil für eine Solarpaneele befestigt werden kann. Das hakenförmige Element 5 beziehungsweise der Bügel, der zwischen den Dachplatten die Haltekraft nach außen überträgt, ist mit dem Befestigungskörper, hier der Ankerplatte, beispielsweise mit Hilfe einer Schweißverbindung entlang der Linie 11 verbunden. Kommt es nun zu den beschriebenen Belastungen, bei welcher der Dachhaken die Schneelast über den Bügel in die Ankerplatte und damit in die Dachkonstruktion, beispielsweise in den Dachsparren einleitet, so ist die Schweißnaht 11 durch diese Kräfte hoch belastet, insbesondere bei elastischem Nachgeben. Es kann zum Bruch der Schweißnaht kommen und damit zum Lösen der Befestigung.

Ein weiterer Nachteil des in Figur 1 gezeigten massiven Befestigungselements 1 sind der hohe Herstellaufwand, bei dem das Langloch in das massive Hakenteil beispielsweise durch Bohren eingebracht werden muss und das hakenförmige Element mit dem Befestigungskörper in einem separaten Arbeitsschritt verbunden werden muss.

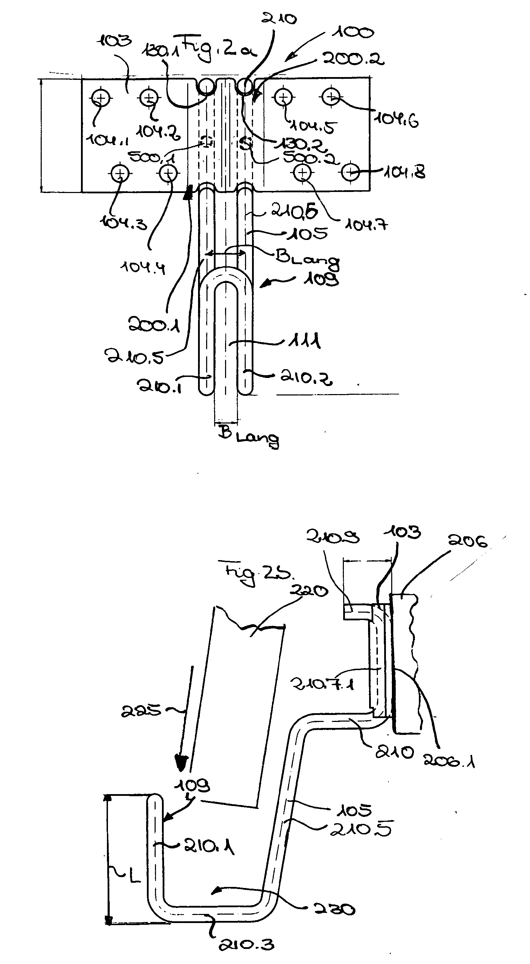

Die Figuren 2a bis 2c zeigen eine Draufsicht, eine Seitenansicht sowie eine Ansicht von oben eines erfindungsgemäßen Dachhakenelementes.

Das erfindungsgemäße Dachhakenelement 100 zeichnet sich dadurch aus, dass anstelle des massiven hakenförmigen Elementes beziehungsweise Bügels, wie er in Figur 1 dargestellt ist, nunmehr ein ebenfalls hakenförmiges gebogenes Drahtbiegeteil 105 zum Einsatz kommt. Die Ankerplatte beziehungsweise der Befestigungskörper ist mit Bezugsziffer 103 bezeichnet. In dem Befestigungskörper sind insgesamt acht Bohrungen 104.1, 104.2, 104.3, 104.4, 104.5, 104.6, 104.7, 104.8 eingebracht, durch die Verbindungsmittel durch den Befestigungskörper hindurch in ein tragendes Element des Daches, beispielsweise einen Dachsparren 206, eingetrieben werden können. Die Ankerplatte bzw. der Befestigungskörper weist eine Vorderseite 202 und eine Rückseite 204 auf. Die Stärke S der Ankerplatte beträgt zwischen 2 mm und 20 mm, bevorzugt bei vorliegendem Ausführungsbeispiel bei 4 mm. Bevorzugt wird die Ankerplatte durch Stanzen hergesteltt, d. h. die Ankerplatte ist ein Stanzteil. Besonders gut ist die Ankerplatte in Fig. 2c zu erkennen. Die Rückseite 204 der Ankerplatte ist in der Regel mit einem Tragwerk, beispielsweise einem Dachsparren 206 z. B. mit Schrauben verbunden. Der Befestigungskörper bzw. die Ankerplatte 103 weist vorliegend zwei Ausbuchtungen, die insbesondere in Figur 2c besonders detailliert dargestellt sind; auf und die die Bezugsziffern 200.1, 200.2 tragen. Die Ausbuchtungen 200.1, 200.2 werden an der Rückseite 204 der Ankerplatte, wie in Fig. 2c gezeigt, ausgebildet. In die Ausbuchtungen 200.1, 200.2 eingelegt wird der Draht 210 des Drahtbiegeelementes 105. Das Drahtbiegeelement ist mit Bezugsziffer 105 bezeichnet. Das Drahtbiegeelement bildet ein hakenförmiges Element 109 aus und ist aus einem gebogenen Stück Draht, bevorzugt mit einer Stärke von 4 mm auf einfache Art und Weise durch Biegen hergestellt, Die Drahtstärke ist aber hierauf nicht beschränkt. An der Rückseite 204 des Befestigungskörpers kann das hakenförmige Drahtblegeelement 105 dann in den Ausnehmungen 200.1, 200.2 punktuell mit dem Befestigungskörper 103, hier dem Ankerkörper, nicht lösbar, beispielsweise durch Schweißpunkte 500.1, 500.2, verbunden werden. Es ist möglich, dass das Verbinden mit Hilfe von Schweißpunkten an einer oder an mehreren Stellen mit der Rückseite 204 der Ankerplatte erfolgt. Wie aus Fig. 2c gut zu erkennen, kommen die Teile bzw. Abschnitte 210.7.1, 210.7.2 des Drahtes 210 zwischen der Rückseite 204 des Befesfigungskörpers bzw. der Ankerplatte 103 und einer Fläche 206.1 eines Tragwerks, beispielsweise eines Dachsparrens 206 zu Liegen bzw. werden dort eingeklemmt. Die Verbindung z. B. in Form von Schweißpunkten 500.1, 500.2 des hakenförmig gebogenen Drahtes 210 und des Befestigungskörpers 103 werden somit unter den Befestigungskörper 103 verlegt und liegen nicht in der Belastungszone von hakenförmigem Element 105 und Befestigungskörper 103.

Durch den beabstandeten und in Form eines Hakens 109 gebogenen Draht 210 wird eine Führung in einer Art Langloch 111, wie in Fig. 2a gezeigt, ausgebildet, in der Verbindungsmittel, beispielsweise Schrauben für die Rahmenkonstruktion zur Aufnahme des Solarpaneels befestigt werden können. Auch eine direkte Befestigung der Solarpaneele wäre möglich.

Im Gegensatz zum Langloch bei der herkömmlichen Ausführungsform, wie in Fig. 1 gezeigt, lässt die Führung 111 des hakenförmigen Drahtbiegeelements 105 eine wesentlich flexiblere Befestigung der Rahmenkonstruktionen, vorzugsweise aus Aluminium oder der Solarpaneele selbst, im Bereich der Führung bzw. der einem Langloch ähnlichen Öffnung 111 des Drahtbiegelementes zu. Die Breite B_{Lang} der Führung 111 wird durch den Abstand der Drahtabschnitte 210.1, 210.2 bzw. 210.5, 210.6 des Drahtes 210 im Bereich des Hakens 109 bzw. des zum Befestigungskörpers 103 rücklaufenden Teiles des Drahtbiegeteiles 105 gegeben. Bevorzugt liegt B_{Lang} zwischen 8 mm und 20 mm, bevorzugt bei 12 mm. Die Drahtstärke des Drahtes 210 liegt ohne Beschränkung zwischen 1 mm und 20 mm, bevorzugt zwischen 2 mm und 10 mm, vorliegend bei 4 mm. Eine Befestigung ist sehr flexibel entlang der gesamten Länge L im Bereich des Hakens 109, d. h. im Bereich des Drahtteils 210.1, 210.2, möglich oder aber auch im Bereich des Drahtteiles 210.5, 210.6, die im rücklaufenden Teil des Drahtbiegeelementes 105 eine Führung ausbilden. Im Fall einer Befestigung der Solarpaneele bzw. einer Unterkonstruktion für eine Solarpaneele erfolgt diese im Bereich des Hakens 109 beispielsweise von oben und im Bereich des rücklaufenden Drahtteiles 210.5, 210.6 von der Seite. Die Drahtteile 210.7.1 und 210.7.2 des Drahtes kommen zwischen der Rückseite 204 des Befestigungskörpers 103 und der Fläche 206.1 z. B. des Dachsparrens 206 zu Liegen. Im Bereich 210.7.1, 210.7.2 kann der Draht 210 des Drahtbiegeelementes 105 mit dem Befestigungskörper 103 nicht lösbar, z. B. durch Schweißpunkte verbunden sein. Um ein Herausgleiten des Drahtes 210 aus den Ausnehmungen bzw. Ausbuchtungen 200.1, 200.2, des Befestigungskörpers 103 insbesondere bei Zug, zu verhindern ist der Draht wie in Figur 2b gezeigt im Bereich 210.9 nach vorne über den Befestigungskörper 103 gebogen und liegt auf dem Befestigungskörper im Bereich 130.1, 130.2 (Figur 2a) auf.

Die hakenförmige Form 109 des Drahtbiegeelementes 105 Ist insbesondere in der Seitenansicht von Figur 2b deutlich zu erkennen.

In Fig. 2b werden desweiteren Teile des Daches gezeigt, so als Beispiel für ein Tragwerk ein Dachsparren 206, an dem die Ankerplatte 103 angeordnet bzw. befestigt ist sowie ein Ziegel 220 der Dacheindeckung.

Wie in Figur 2b zu erkennen, wird der Befestigungskörper, hier die Ankerplatte 103, an einem Dachsparren 206, beispielsweise mittels lösbarer Verbindungen, befestigt. Sodann werden die zurückgeschobenen Dachziegel 220 in die vom Haken 109 ausgebildete Ausnehmung 230 des Drahtbiegeelementes 105 in Pfeilrichtung 225 eingeschoben. Der Dachziegel 220 wird in der Regel nicht vollständig in die Ausnehmung 230 bis zum Drahtteil 210.3 eingeschoben, sondern nur teilweise. Im Allgemeinen wird ein Bereich um den Drahtabschnitt 210.3 freigelassen, um zu verhindern, dass bei Belastung z. B. elastischen Nachgeben des Dachhakens dieser mit dem Ziegel 220 in Berührung kommt und dieser hierdurch beschädigt wird. Bevorzugt ragt der hakenförmige Teil 109 des Drahtbiegeelementes aus der durch die Dachziegel 220 gebildeten Dachoberfläche heraus. In diesem Bereich des Hakens kann dann in einer ersten Ausgestaltung mit Hilfe eines lösbaren Verbindungsmittels, beispielsweise einer Schraube, eine Rahmenkonstruktion für eine Solarpaneele oder die Solarpaneele selbst befestigt werden.

Der Bügel, der durch das Drahtbiegeelement 105 ausgebildet wird, überträgt dann die Haltekraft nach außen außerhalb der Dachoberfläche, das heißt außerhalb der Dachziegel.

Die Verwendung gemäß des in Figur 2a und 2c gezeigten Befestigungselements mit einem hakenförmigen Drahtbiegeelement dient insbesondere zur Befestigung von Dachaufbauten, insbesondere Solaranlagen sowohl für die Photovoltaik wie für Brauchwasser, zur Befestigung von Teilen dieser Solaranlagen, insbesondere der Solarpaneelen.

Im Gegensatz zu herkömmlichen Befestigungselementen zeichnet sich das Befestigungselement mit einem Drahtbiegeteil als hakenförmigem Element beziehungsweise Haltebügel durch eine einfache Herstellbarkeit und eine hohe Belastbarkeit, insbesondere auch Biegebelastbarkeit aus. Mit einem Tragwerk bildet das erlindungssgemäße Befestigungselement ein statisches System, das Schub-, Wind-, Druck- und Soglasten aufnehmen kann.

Die Erfindung umfasst Aspekte die in den nachfolgenden Sätzen niedergelegt sind, die Teil der Beschreibung sind, aber nicht Ansprüche in Übereinstimmung mit J15/88 der Beschwerdekammer
1. Befestigungselement für Dachaufbauten, umfassend einen Befestigungskörper (103), wenigstens ein mit dem Befestigungskörper (103) verbundenes hakenförmiges Element (109),
   **dadurch gekennzeichnet, dass**
   das hakenförmige Element (109) wenigstens teilweise ein Drahtbiegeelement umfasst (105).
2. Befestigungselement nach Satz 1,
   **dadurch gekennzeichnet, dass**
   der Befestigungskörper (103) eine Vorderseite (202) und eine Rückseite (204) aufweist und das Drahtbiegeelement (105) wenigstens teilweise hinter die Rückseite (204) des Befestigungskörpers (103) geführt wird.
3. Befestigungselement nach Satz 2,
   **dadurch gekennzeichnet, dass**
   das Drahtbiegeelement (105) den Befestigungskörper an der Rückseite (204) hintergreift.
4. Befestigungselement nach einem der Sätze 1 bis 3,
   **dadurch gekennzeichnet, dass**
   der Befestigungskörper (103) wenigstens eine Aufnahme (200.1, 200.2) aufweist, die ein Teil des Drahtbiegeelementes aufnimmt.
5. Befestigungselement nach einem der Sätze 2 bis 4,
   **dadurch gekennzeichnet, dass**
   das Drahtbiegeelement (105) an wenigstens einem Punkt mit der Rückseite (204) des Befestigungskörpers verbunden ist.
6. Befestigungselement nach Satz 5,
   **dadurch gekennzeichnet, dass**
   die Verbindung eine nicht lösbare Verbindung, insbesondere eine Schweißverbindung ist.
7. Befestigungselement nach einem der Sätze 1 bis 6,
   **dadurch gekennzeichnet, dass**
   der Befestigungskörper (103) Bohrungen (104.1, 104.2, 104.3, 104.4, 104.5, 104.6, 104.7, 104.8) aufweist.
8. Verwendung eines Befestigungselementes gemäß einem der Sätze 1 bis 7 zur Befestigung von Teilen von Solaranlagen, insbesondere Solarpaneelen.
9. Dachaufbau, insbesondere Solaranlage auf und/oder in einem Dach, umfassend wenigstens eine Solarpaneele und ein Befestigungselement für die Solarpaneele, **dadurch gekennzeichnet, dass**
   das Befestigungselement ein 8efestigungselement gemäß einem der Sätze 1 bis 7 ist, wobei der Befestigungskörper mit dem Dach verbunden ist und die Solarpaneele mit dem drahtbiegeelement verbunden ist.
10. Dachaufbau nach Satz 9,
   **dadurch gekennzeichnet, dass**
   der Befestigungskörper des Befestigungselementes mit einem Dachsparren des Daches lösbar verbunden ist.
11. Dachaufbau nach einem der Sätze 9 bis 10,
   **dadurch gekennzeichnet, dass**
   die Solarpaneele mit dem Drahtbiegeelement lösbar verbunden ist.
12. Dachaufbau nach einem der Sätze 9 bis 10,
   **dadurch gekennzeichnet, dass**
   eine Halteeinrichtung für die Solarpaneele lösbar mit dem Drahtbiegeelement verbunden ist.
13. Verfahren zur Befestigung eines Teiles einer Solaranlage, insbesondere einer Solarpaneele auf und/oder in einem Dach mit einem Befestigungselement nach einem der Sätze 1 bis 7, umfassend folgende Schritte:
   - Anbringen des Befestigungskörpers mit Befestigungsmitteln, bevorzugt Schrauben an einem Dachsparren hinter wenigstens einem Ziegel;
   - Überdecken des Befestigungskörpers mit dem wenigstens einen Ziegel;
   - Anbringen des Teils der zu befestigenden Solaranlage, insbesondere der Solarpaneele direkt oder indirekt über eine Halteeinrichtung an dem hakenförmigen Element.

## Patentansprüche

1. Befestigungselement für Dachaufbauten, umfassend einen Befestigungskörper (103),
wenigstens ein mit dem Befestigungskörper (103) verbundenes hakenförmiges Element (109),
**dadurch gekennzeichnet, dass**
das hakenförmige Element (109) wenigstens teilweise ein Drahtbiegeelement aus gebogenem Draht (210) umfasst (105), wobei durch den in die Form eines Hakens gebogenen Drahtes (210) insbesondere eine Art Langloch (111) ausgebildet wird und
der Befestigungskörper (103) eine Vorderseite (202) und eine Rückseite (204) aufweist und der Draht (210) des Drahtbiegeelementes (105) wenigstens teilweise hinter die Rückseite (204) des Befestigungskörpers (103) geführt wird, derart, dass
das Drahtbiegeelement (105) mit den Befestigungskörper an der Rückseite (204) an wenigstens einem Punkt verbunden ist.

2. Befestigungselement nach Anspruch 1,
**dadurch gekennzeichnet, dass**
der Befestigungskörper (103) wenigstens eine Aufnahme (200.1, 200.2) an seiner Rückseite aufweist, die ein Teil 210.7.1, 210.7.2 des Drahtes (210) des Drahtbiegeelementes aufnimmt.

3. Befestigungselement nach einem der Ansprüche 1 bis 2,
**dadurch gekennzeichnet, dass**
der Draht (210) des Drahtbiegeelementes (105) die Rückseite (204) des Befestigungskörpers (103) hintergreift.

4. Befestigungselement nach Anspruch 3,
**dadurch gekennzeichnet, dass**
die Verbindung eine nicht lösbare Verbindung, insbesondere eine Schweißverbindung ist, wobei die Schweißverbindung insbesondere den Draht (210) des Drahtbiegeelementes (105) mit der Rückseite (204) des Befestigungskörpers verbindet.

5. Befestigungselement nach einem der Ansprüche 1 bis 4,
**dadurch gekennzeichnet, dass**
der Befestigungskörper (103) Bohrungen (104.1, 104.2, 104.3, 104.4, 104.5, 104.6, 104.7, 104.8) aufweist.

6. Befestigungselement nach einem der Ansprüche 1 bis 5, **dadurch gekennzeichnet, dass** der Befestigungskörper (103) ein plattenförmiger Befestigungskörper, insbesondere eine Ankerplatte ist.

7. Verwendung eines Befestigungselementes gemäß einem der Ansprüche 1 bis 6 zur Befestigung von Teilen von Solaranlagen, insbesondere Solarpaneelen.

8. Dachaufbau, insbesondere Solaranlage auf und/oder in einem Dach, umfassend wenigstens eine Solarpaneele und ein Befestigungselement für die Solarpaneele, **dadurch gekennzeichnet, dass**
das Befestigungselement ein Befestigungselement gemäß einem der Ansprüche 1 bis 6 ist, wobei der Befestigungskörper (103) mit einem Tragwerk, insbesondere einem Teil des Daches, insbesondere einem Dachsparren (206) verbunden ist und die Solarpaneele mit dem Drahtbiegeelement (105)verbunden ist.

9. Dachaufbau nach Anspruch 8,
**dadurch gekennzeichnet, dass**
der Befestigungskörper (103) des Befestigungselementes mit einem Dachsparren (206) des Daches lösbar oder unlösbar verbunden ist.

10. Dachaufbau nach Anspruch 9, **dadurch gekennzeichnet, dass** die Rückseite (204) des Befestigungskörpers (103) mit dem Dach, insbesondere dem Dachsparren (206) verbunden ist und der Draht (210) des Drahtbiegeelementes wenigstens teilweise zwischen der Rückseite (204) des Befestigungskörpers (103) und dem Dachsparren (206) zu Liegen kommt.

11. Dachaufbau nach einem der Ansprüche 9 bis 10,
**dadurch gekennzeichnet, dass**
die Solarpaneele mit dem Drahtbiegeelement (105) insbesondere im Bereich des Langloches (111) lösbar verbunden sind.

12. Dachaufbau nach einem der Ansprüche 9 bis 10,
**dadurch gekennzeichnet, dass**
eine Halteeinrichtung für die Solarpaneele lösbar, insbesondere im Bereich des Langloches (111) mit dem Drahtbiegeelement (105) verbunden ist.

13. Verfahren zur Befestigung eines Teiles einer Solaranlage, insbesondere einer Solarpaneele auf und/oder in einem Dach mit einem Befestigungselement nach einem der Ansprüche 1 bis 6, umfassend folgende Schritte:
- Anbringen des Befestigungskörpers (103) des Befestigungselementes mit Befestigungsmitteln, bevorzugt Schrauben an einem Teil des Daches, insbesondere einem Dachsparren (206), hinter wenigstens einem Ziegel (220);
- Überdecken des Befestigungskörpers (103) mit dem wenigstens einen Ziegel (220);
- Anbringen des Teils der zu befestigenden Solaranlage, insbesondere der Solarpaneele direkt oder indirekt über eine Halteeinrichtung an dem hakenförmigen Element (109) des Befestigungselementes.

14. Verfahren nach Anspruch 13,
**dadurch gekennzeichnet, dass** das hakenförmige Element (109) ein Drahtbiegeelement ist und der in die Form eines Hakens gebogene Draht (210) wenigstens teilweise zwischen dem Befestigungskörper (103) und einem Teil des Daches, insbesondere einem Dachsparren (206) zu Legen kommt, wenn der Befestigungskörper an dem Dachsparren (206) angebracht wird.
